# EUROPEAN PATENT SPECIFICATION

(11) **EP 2 372 402 B1**
(45) Date of publication and mention of the grant of the patent: **19.06.2013**
(21) Application number: 11158115.3
(22) Date of filing: 14.03.2011
(51) Int. Cl.: G01V 1/38

(54) **Self-Positioning Nodal Geophysical Recorder**
Selbstpositionierendes geophysikalisches Knotenaufzeichnungsgerät
Enregistreur géophysique nodal à positionnement automatique

(30) Priority: 22.03.2010 US 661664
(43) Date of publication of application: 05.10.2011
(73) Proprietor: PGS Geophysical AS, 1366 Lysaker (NO)
(72) Inventor: Tenghamn, Stig Rune Lennart, Katy, TX 77450 (US)
(74) Representative: Skone James, Robert Edmund

(56) References cited:
- WO-A1-2007/040411
- WO-A2-01/92918
- WO-A2-02/37140
- US-A- 5 894 450
- US-A1- 2003 075 096

## Description

### Field of the Invention

The invention relates generally to the field of marine geophysical data acquisition. More specifically, the invention relates to nodal data recorders that are self positioning on the bottom of a body of water.

### Background Art

Marine geophysical data recording, in particular seismic data recording, may be performed using "nodal" recorders. Nodal recorders are self contained devices that are disposed at selected positions on the bottom of a body of water such as a lake or the ocean. An energy source deployed in the water is actuated at selected times and signals generated by sensors in the nodal recorders are stored in a recording device associated with each nodal recorder. SeaBed Geophysical AS, Transittg. 14 - 7042 Trondheim, Norway has developed a water bottom seismic node recording system called CASE® ("CAble less SEismic system"). The CASE system design is based on the concept of fully autonomous operation (i.e. no cables or surface telemetry). Autonomous operation is obtained by a design in which the unit is fully battery operated, with an internal capacity to record 2 millisecond samples of four-component seismic data (three orthogonal particle motion components and one pressure gradient component), substantially continuously up to 80 days. The CASE system includes a surface-to-node acoustic communications link to enable daily quality checking of the CASE nodal recording units throughout a data acquisition operation. The surface-to-node acoustic link also allows the system to be remotely queried, started, and stopped. Such function can also effectively extend the battery operating time on the CASE units. Deployment of the CASE units requires a remotely operated vehicle ("ROV") in water depths exceeding about 300 meters. In shallower water, a "planting frame" is used instead of the ROV. Practical applications for node acquisition begin with accuracy of placement. Using a planting frame or ROV as applicable, each node can be individually placed to within 1 meter of its intended geodetic position in a geophysical survey design. Such accuracy allows nodes to be used to particular advantage in applications involving uneven water bottom, environmentally sensitive areas, highly obstructed areas, and transition zones.

Fairfield Industries Inc., 1111 Gillingham Lane Sugar Land, Texas 77478 is another company that has developed node-based data recording systems. The Fairfield Industries system is called the "Z system." The Z-system has been developed to acquire true "all-azimuth" seismic surveys. The nodal recorder technology can be used either to complement or, where applicable, replace traditional acquisition techniques (e.g., streamers or ocean bottom cables). Just as for the SeaBed Geophysical nodal recorders, deployment of the nodal devices made by Fairfield Industries requires use of a planting frame or ROV, depending on the water depth.

Deep-water nodal recording technology is not yet a substitute for streamer (near surface) acquisition in large-scale exploration surveys. Node recording technology for the time being is focused on specific areas that essentially demand this type technology for exceptional quality imaging. This holds true both in deep water and the usually congested shallow water shelf areas, where the cable-free nodes can be deployed with relative ease.

The main advantages of using node data recording systems can be summarized as follows. Node systems provide true all-azimuth capability, for quality data gathering to image beneath salt bodies, which substantially distort the seismic signal. Salt obstructions are widespread, particularly in the deep water Gulf of Mexico. 4-D, or time-lapse seismic, which is becoming increasingly necessary for effective reservoir monitoring and management, and can be used in deep-water fields. Infill areas are an excellent application for nodal recording technology. Platforms often are placed over the geographic center of a hydrocarbon producing field, and acquisition of seismic data around the field with streamers fails to address the void area. Node placement in the void area allows the streamer vessels to simultaneously record both streamer and node data, which can be merged in processing so the field is geophysically transparent. Because nodal seismic data recording units typically have a hydrophone and three geophones, the nodes are inherently multi-component, or 4-C, capable. Since nodal recorders can record converted waves (compressional to shear), they have the ability to record signals that pass through gas bearing formations. Such gas bearing formations make it difficult to acoustically illuminate the subsurface geology using conventional streamer seismic acquisition methodology.

Notwithstanding the benefits of nodal acquisition and recording of geophysical survey data noted above, it is difficult and expensive to position each node at a selected geodetic location prior to a survey because of the need to individually position each node using a planting frame or ROV. It is also difficult and expensive to recover the nodal recorders after the survey is completed. There exists a need for improved nodal recording devices that can be more efficiently placed at the correct geodetic positions for a geophysical survey and recovered more easily after the survey is completed. WO2007040411A, WO0192918A and US5894450A all disclose recording devices in accordance with the preamble of claim 1.

### Summary of the Invention

The invention consists in a nodal geophysical recorder, comprising:
a housing;
   at least one geophysical sensor disposed within the housing;
   a recording device for recording signals detected by the at least one geophysical sensor;
   a navigation device configured to determine a path between an initial geodetic position of the housing and a selected geodetic position on the bottom of a body of water; and
   at least one deflector in signal communication with the navigation device and configured to cause the housing to move along the determined path after the housing is released into the body of water from the initial position;
   characterised by a drag inducing device operably associated with the housing and configured to control a rate of descent of the housing through the water.

Other aspects and advantages of the invention will be apparent from the following description and the appended claims.

### Brief Description of the Drawings

FIG. 1 shows a survey vessel deploying nodal recorders at the bottom of a body of water in a selected pattern to conduct a survey.

FIG. 2 shows the recording parts of one of the nodal recorders shown in FIG. 1.

FIG. 3 shows an example navigation section of one of the nodal recorders.

FIG. 4 shows an alternative device to retrieve the nodal recorder.

### Detailed Description

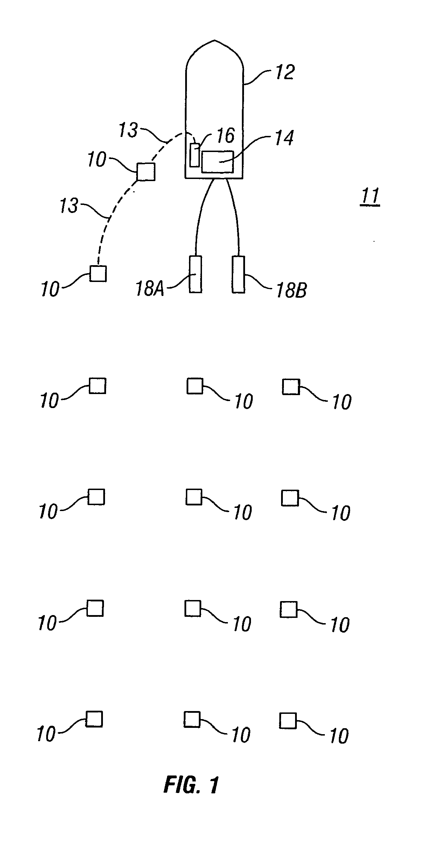

An example nodal recorder geophysical survey system including a survey vessel 12 and on board recording systems 14 is shown in FIG. 1. The vessel 12 moves along the surface of a body of water 11 such as a lake or the ocean. The recording system 14 typically includes equipment (none shown separately in FIG. 1) for actuating one or more energy sources 18A, 18B at selected times, for determining the geodetic position of the vessel 12 at any time, and for communicating, explained below, with nodal data recorders 10 deployed from the vessel 12 and positioned on the water bottom.

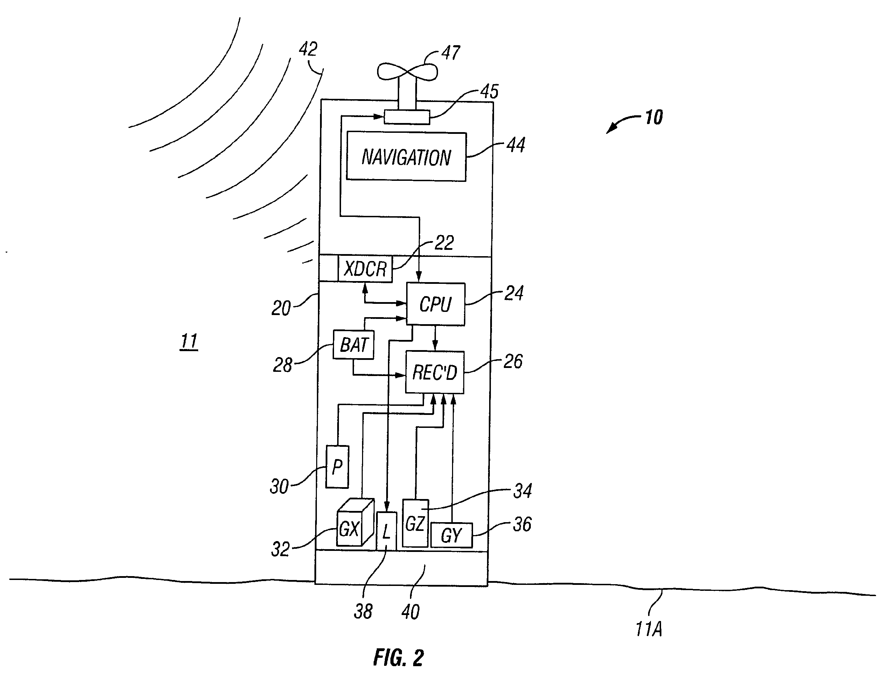

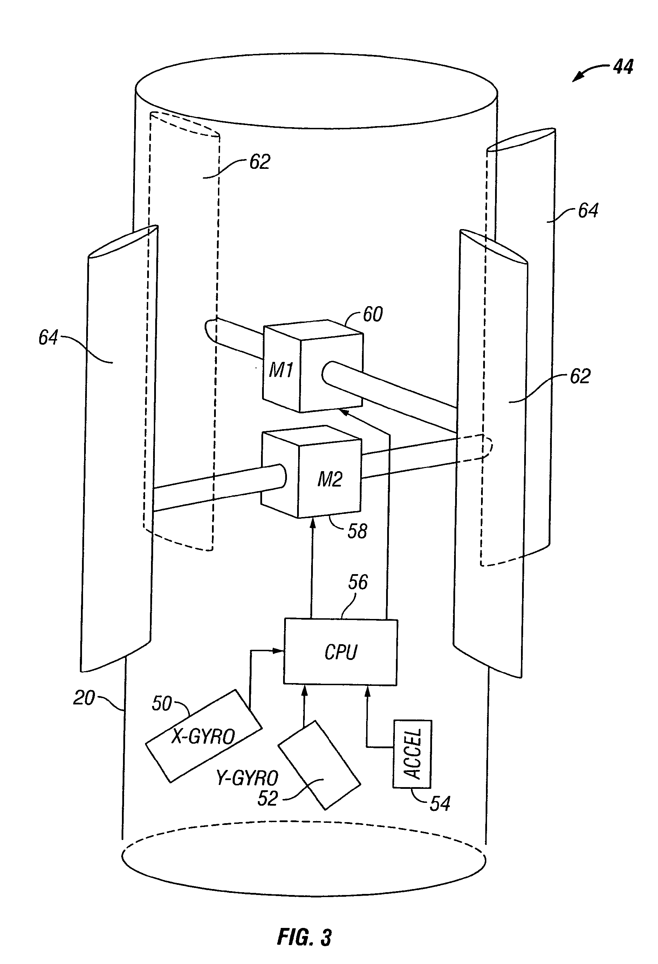

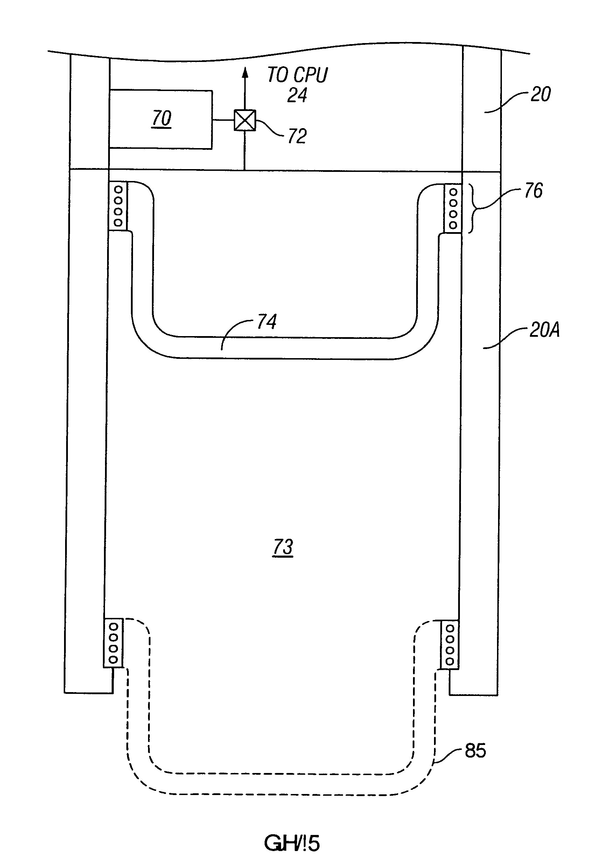

The nodal recorders 10 are shown on the bottom of the body of water 11 after having been "launched" from the vessel 12 by a launcher or similar device to eject or deploy the nodal recorder 10 from the vessel 12 and cause it to enter the water 11. The geodetic position of the vessel 12 is determined at the time of launch of each nodal recorder 10, and navigation devices (explained below with reference to FIG. 3) in each nodal recorder 10 will cause the nodal recorder 10 to follow a selected path 13 as it travels from the water surface to the water bottom, so that when the recorder 10 reaches the water bottom (11A in FIG. 2), it is deployed at a selected geodetic position.

FIG. 2 shows an example of the geophysical data sensing and recording components of one of the nodal recorders 10. The sensing recording components may be disposed in a pressure resistant housing 20. The geophysical sensors may include, for example, particle motion responsive sensors such as accelerometers or geophones, each preferably oriented along a mutually orthogonal direction from the other particle motion responsive sensors. The foregoing are shown in FIG. 2 at 32, 34 and 36. A pressure or pressure time gradient responsive sensor, such as a hydrophone, is shown at 30 and is in pressure communication with the water 11 outside the housing 20. A central processor 24, such as a microprocessor, controls operations of the sensors described above and a recording device 26. Commands may be received acoustically 42 such as from the vessel (12 in FIG. 1) and detected by a transducer 22 disposed in the housing 20 and in signal communication with the water 11. The transducer 22 is also in signal communication with the central processor (CPU) 24. Upon receipt of a command, for example, to begin recording, the CPU 24 will activate the recording device 26. Signals detected by the various sensors described above may be recorded, typically with reference to a selected time index. Such recording may continue until receipt of a subsequent command, such as through the water acoustically as shown at 42, to stop recording. Such command control may extend the life of batteries 28 disposed in the housing 20 and used to provide electrical power to operate the various devices inside the housing 20.

The housing 20 can be coupled to a base plate 40 by an electrically operable latch 38. The housing 20, notwithstanding the contents therein, can be positively buoyant. The base plate 40 can be made from a dense material or have a core of dense materials, for example, degradable concrete, so that the baseplate 40 provides negative buoyancy to the entire nodal recorder 10 when the housing 20 is assembled to the baseplate 40. When the survey is completed, for example, a command (e.g., acoustic at 42) may be communicated to the CPU 24 which will operate the latch 38 to release the housing 20 from the baseplate 40. The housing 20 may float to the surface for recovery by the vessel (12 in FIG. 1).

The housing 20 may also include navigation devices 44, which will be explained in more detail with reference to FIG. 3, and as explained above causes the nodal recorder 10 to traverse a selected path through the water 11 so that it is disposed at a selected geodetic position when it reaches the water bottom 11A.

In some examples, the housing 20 may include an electric or other type of selectively controllable brake 45 rotationally coupled to a turbine or propeller 47 disposed outside the housing 20. The brake 45 may be controlled by the CPU 24 so that the propeller 47 creates a selected drag on the housing 20. If the housing 20 exceeds a predetermined rate of descent through the water 11, the CPU can cause operation of the brake 45 to increase the drag. The rate of descent may be determined by measuring the rate of change of the external ambient water pressure, such as by using certain types of hydrophones for the hydrophone 30 seismic sensor.

An example of navigation devices 44 is shown in more detail in FIG. 3. The navigation devices 44 may include two opposed pairs of fins 62, 64 disposed circumferentially about the exterior of the housing 20. In their neutral position the fins 62, 64 are parallel to the longitudinal axis of the housing 20 such that the housing 20 will fall substantially vertically through the water (11 in FIG. 1) and will resist reactive rotation caused by the propeller or turbine described above. The fins 62, 64 are rotatable about a line typically perpendicular to their longitudinal dimension, and are coupled to respective deflection motors, 58, 60, such that operation of deflection motor 58 will rotate the one opposed pair of fins 62. Corresponding operation of deflection motor 60 will rotate the other opposed pair of fins 64.

A navigation central processor 56 (or in some examples such functionality may be programmed unto the CPU 24 in FIG. 2) such as a microprocessor may be initialized with the geodetic position of the nodal recorder at the time of launch or deployment of the nodal recorder. Such geodetic position may be obtained, for example by obtaining signals from a global positioning system satellite receiver (not shown) forming part of the recording unit (14 in FIG. 1). The initial programming may also include a selected or predetermined geodetic position of the nodal recorder 10 when it reaches the water bottom (11 in FIG. 2). Thus, the nodal recorder will have a final position that is determinable as a difference in coordinates between the initial position and the final position. The navigation devices may include a first Earth rate gyroscope 50 oriented along one axis normal to the longitudinal axis of the housing 20 (X gyro), and a second Earth rate gyroscope 52 oriented along an axis orthogonal to both of the foregoing (Y gyro). An accelerometer 54 may be oriented to determine deflection of the housing axis from vertical. The foregoing three measurements may be used in the central processor 56 to determine the net movement of the housing 20 in directions other than vertical from the original geodetic position. The central processor 56 may be programmed to operate the deflection motors 58, 60 to cause the fins 62, 64 to deflect the motion of the housing 20 to guide the housing toward the selected geodetic position on the water bottom. Suitable deflection of motion causes the housing 20 to move along a selected path (see 13 in FIG. 1) so that the final position of the nodal recorder (10 in FIG. 1) is the selected geodetic position. The foregoing maybe repeated for each such nodal recorder launched or deployed from the vessel (12 in FIG. 1).

The gyroscopes 50, 52 may preferably be gimbal mounted on a frame (not shown) to enable the gyroscopes 50, 52 to remain in their respective orientations notwithstanding rotation of the housing 20. A non-limiting example of such a navigation system using gimbal mounted gyroscopes is described in U.S. Patent No. 4,611,405 issued to van Steenwyk.

Returning to FIG. 1, when all the nodal recorders 10 have been deployed, the recording unit 14 may send an acoustic command (detected by the transceiver 22 in FIG. 1) to initiate signal recording. The energy sources 18A, 18B, which may be, for example, arrays of seismic air guns, may be actuated at selected times and the signals detected by the various sensors in the nodal recorders (see FIG. 2) may be recorded therein.

After the survey is completed, the recoding unit 14 may send a command signal to release the latch (38 in FIG. 2) in each nodal recorder 10. The baseplates (40 in FIG. 2) will remain on the water bottom, but the remainder of each of the nodal recorders 10 will float to the surface, whereupon they may be recovered by the vessel. In some examples, the CPU (24 in FIG. 2) may be programmed, after release of the latch (38 in FIG. 2) to cause the transceiver (22 in FIG. 2) to emit an acoustic signal to facilitate location of the nodal recorder 10 by the vessel 12 for recovery of the nodal recorder 10.

The nodal recorder may be redeployed (launched) after installation of a replacement baseplate (40 in FIG. 2).

An alternative device to recover the nodal recorder is shown schematically in FIG. 4. Instead of the baseplate (40 in FIG. 2), the housing 20 may include a cylindrical extension 20A in which may be disposed a piston 74 sealed by o-rings 76 or the like. A high pressure gas source 70 may be disposed in the housing 20 and may be connected to the back side of the piston 74 through a solenoid valve 72. The valve 72 may open upon receipt of a signal from the central processor (24 in FIG. 2), thus pressurizing the back side of the piston 74 and causing it to move downwardly against water pressure. When the piston 74 is fully extended (shown as dotted lines) it may then exert reactive force against the water bottom, and at the same time define a gas filled chamber 73 inside the housing extension 20A. Dimensions of the housing extension 20A may be selected so that full extension of the piston 74 displaces enough water to cause the entire assembly (housing and housing extension) to be positively buoyant, thus floating the nodal recorder to the surface. When the piston 74 is in its retracted position, the entire assembly may be negatively buoyant to enable the nodal recorder to move to the water bottom.

Nodal recording systems according to the invention do not require a planting frame or the use of a remotely operated vehicle to deploy the individual recorders. Accordingly, it is expected that efficiency of deployment, operation and recovery will be improved over nodal geophysical recorders known in the art prior to the present invention.

## Claims

1. A nodal geophysical recorder (10), comprising:
a housing (20);
at least one geophysical sensor (30, 32, 34, 36) disposed within the housing;
a recording device (26) for recording signals detected by the at least one geophysical sensor;
a navigation device (44) configured to determine a path between an initial geodetic position of the housing and a selected geodetic position on the bottom (11A) of a body of water (11); and
at least one deflector (62, 64) in signal communication with the navigation device and configured to cause the housing to move along the determined path after the housing is released into the body of water from the initial position;
**characterised by** a drag inducing device (47) operably associated with the housing and configured to control a rate of descent of the housing (20) through the water (11).

2. The recorder (10) of claim 1, wherein the at least one geophysical sensor (30, 32, 34, 36) comprises a hydrophone.

3. The recorder (10) of claim 1, wherein the at least one geophysical sensor (30, 32, 34, 36) comprises particle motion sensors.

4. The recorder (10) of any of the preceding claims, wherein the navigation device (44) comprises:
at least one gyroscope (50, 52);
an accelerometer (54) configured to measured deflection of the housing (20) from vertical;
a central processor (56) in signal communication with the at least one gyroscope and the at least one accelerometer, the central processor configured to determine movement of the housing other than vertical, the central processor configured to operate the at least one deflector (62, 64) to cause the determined movement to follow the determined path.

5. The recorder (10) of any of the preceding claims, further comprising a transducer (22) in signal communication with the recording device (26), the transducer configured to detect commands (42) transmitted through the water (11).

6. The recorder (10) of claim 5, wherein the commands (42) include an instruction to initiate recording of signals detected by the at least one geophysical sensor (30, 32, 34, 36).

7. The recorder (10) of any of the preceding claims, wherein a baseplate (40) is couplable to the housing (20) by a releasable latch (38), wherein the housing with baseplate attached is negatively buoyant, and wherein the housing detached from the baseplate is positively buoyant.

8. The recorder (10) of claim 7, further comprising a transducer in signal communication with the latch (38), the transducer configured to detect a command (42) transmitted through the water (11), the command configured to release the latch.

9. The recorder (10) of claim 8, wherein the transducer is configured to emit a signal into the water (11) to facilitate location of the housing (20) upon floatation of the housing to the water surface.

10. The recorder (10) of any of claims 1 to 6, wherein the housing (20) comprises a piston (74) slidably disposed therein and coupled to a selectively controllable source (70) of pressurized gas, the gas source and piston configured such that application of gas to the piston cause motion thereof against water (11) and will increase a gas filled volume of the housing (20) such that the housing becomes positively buoyant.

11. The recorder (10) of claim 10, further comprising a solenoid operated valve (72) configured to release the pressurized gas upon receipt of a signal.

12. The recorder (10) of any of the preceding claims, wherein the drag inducing device (47) creates a selected drag on the housing (20).

13. The recorder (10) of any of the preceding claims, wherein the drag inducing device (47) comprises a turbine or propeller disposed outside the housing (20) and the housing further includes a brake (45) rotationally coupled to the turbine or propeller, wherein operation of the brake increases the drag on the housing created by the turbine or propeller.

## Patentansprüche

1. Geophysikalisches Knotenaufzeichnungsgerät (10), umfassend:
ein Gehäuse (20),
mindestens einen geophysikalischen Sensor (30, 32, 34, 36), der in dem Gehäuse angeordnet ist;
eine Aufzeichnungseinrichtung (26) zum Aufzeichnen von Signalen, die von dem mindestens einen geophysikalischen Sensor erfasst werden;
eine Navigationseinrichtung (44), die so eingerichtet ist, dass sie einen Weg zwischen einer geodätischen Ausgangsposition des Gehäuses und einer ausgewählten geodätischen Position am Boden (11A) eines Gewässers (11) ermittelt; und
mindestens eine Ablenkvorrichtung (62, 64) in signalübertragender Verbindung mit der Navigationseinrichtung und so eingerichtet, dass sie bewirkt, dass sich das Gehäuse entlang dem ermittelten Weg bewegt, nachdem das Gehäuse von der Ausgangsposition aus in das Gewässer gelassen wird;
**gekennzeichnet durch** eine widerstandserzeugende Vorrichtung (47), die funktionsmäßig dem Gehäuse zugehörig ist und so eingerichtet ist, dass sie eine Sinkgeschwindigkeit des Gehäuses (20) **durch** das Wasser (11) steuert.

2. Aufzeichnungsgerät (10) nach Anspruch 1, wobei der mindestens eine geophysikalische Sensor (30, 32, 34, 36) ein Hydrophon umfasst.

3. Aufzeichnungsgerät (10) nach Anspruch 1, wobei der mindestens eine geophysikalische Sensor (30, 32, 34, 36) Partikelbewegungssensoren umfasst.

4. Aufzeichnungsgerät (10) nach einem der vorhergehenden Ansprüche, wobei die Navigationseinrichtung (44) Folgendes umfasst:
mindestens einen Drehratensensor (50, 52);
einen Beschleunigungssensor (54), der so eingerichtet ist, dass er die Auslenkung des Gehäuses (20) aus der Vertikalen misst;
ein zentraler Prozessor (56) in signalübertragender Verbindung mit dem mindestens einen Drehratensensor und dem mindestens einen Beschleunigungssensor, wobei der zentrale Prozessor so eingerichtet ist, dass er die Bewegung des Gehäuses bis auf die vertikale Bewegung ermittelt, wobei der zentrale Prozessor so eingerichtet ist, dass die mindestens eine Ablenkvorrichtung (62, 64) so betätigt wird, dass bewirkt wird, dass die ermittelte Bewegung den ermittelten Weg nimmt.

5. Aufzeichnungsgerät (10) nach einem der vorhergehenden Ansprüche, ferner umfassend einen Wandler (22) in signalübertragender Verbindung mit der Aufzeichnungseinrichtung (26), wobei der Wandler so eingerichtet ist, dass er durch das Wasser (11) übertragene Befehle (42) erfasst.

6. Aufzeichnungsgerät (10) nach Anspruch 5, wobei die Befehle (42) eine Anweisung zum Beginnen mit der Aufzeichnung von Signalen umfassen, die von dem mindestens einen geophysikalischen Sensor (30, 32, 34, 36) erfasst werden.

7. Aufzeichnungsgerät (10) nach einem der vorhergehenden Ansprüche, wobei eine Grundplatte (40) mit dem Gehäuse (20) über eine lösbare Arretierung (38) verbindbar ist, wobei das Gehäuse mit der angebrachten Grundplatte Abtrieb aufweist und wobei das von der Grundplatte gelöste Gehäuse Auftrieb aufweist.

8. Aufzeichnungsgerät (10) nach Anspruch 7, ferner umfassend einen Wandler in signalübertragender Verbindung mit der Arretierung (38), wobei der Wandler so eingerichtet ist, dass er einen durch das Wasser (11) übertragenen Befehl (42) erfasst, wobei der Befehl so eingerichtet ist, dass er die Arretierung löst.

9. Aufzeichnungsgerät (10) nach Anspruch 8, wobei der Wandler so eingerichtet ist, dass er ein Signal in das Wasser (11) abgibt, um die Ortung des Gehäuses (20) beim Schwimmen des Gehäuses an die Wasseroberfläche zu erleichtern.

10. Aufzeichnungsgerät (10) nach einem der Ansprüche 1 bis 6, wobei das Gehäuse (20) einen Kolben (74) umfasst, der verschiebbar darin angeordnet ist und mit einer gezielt steuerbaren Quelle (70) für Druckgas gekoppelt ist, wobei die Gasquelle und der Kolben so eingerichtet sind, dass durch Beaufschlagen des Kolbens mit Gas eine Bewegung desselben gegen das Wasser (11) bewirkt und ein mit Gas gefülltes Volumen des Gehäuses (20) derart erhöht wird, dass das Gehäuse Auftrieb erhält.

11. Aufzeichnungsgerät (10) nach Anspruch 10, ferner umfassend ein Magnetventil (72), das so eingerichtet ist, dass das Druckgas beim Erhalt eines Signals abgegeben wird.

12. Aufzeichnungsgerät (10) nach einem der vorhergehenden Ansprüche, wobei die widerstandserzeugende Vorrichtung (47) einen gewählten Widerstand auf das Gehäuse (20) erzeugt.

13. Aufzeichnungsgerät (10) nach einem der vorhergehenden Ansprüche, wobei die widerstandserzeugende Vorrichtung (47) eine Turbine oder einen Propeller umfasst, die bzw. der außerhalb des Gehäuses (20) angeordnet ist, und das Gehäuse ferner eine Bremse (45) aufweist, die mit der Turbine oder dem Propeller drehgekoppelt ist, wobei durch die Betätigung der Bremse der Widerstand auf das Gehäuse, der von der Turbine oder dem Propeller erzeugt wird, erhöht wird.

## Revendications

1. Enregistreur géophysique nodal (10), comprenant :
un logement (20) ;
au moins un capteur géophysique (30, 32, 34, 36) disposé dans le logement ;
un dispositif d'enregistrement (26) permettant d'enregistrer des signaux détectés par le au moins un capteur géophysique ;
un dispositif de navigation (44) configuré pour déterminer un trajet entre une position géodésique initiale du logement et une position géodésique sélectionnée sur le fond (11A) d'une masse d'eau (11) ; et
au moins un déflecteur (62, 64) en communication de signal avec le dispositif de navigation et configuré pour amener le logement à se déplacer le long du trajet déterminé après que le logement est libéré dans la masse d'eau depuis la position initiale ;
**caractérisé par** un dispositif déclencheur de traînée (47) associé opérationnellement au logement et configuré pour réguler une vitesse de descente du logement (20) à travers l'eau (11).

2. Enregistreur (10) selon la revendication 1, dans lequel le au moins un capteur géophysique (30, 32, 34, 36) comprend un hydrophone.

3. Enregistreur (10) selon la revendication 1, dans lequel le au moins un capteur géophysique (30, 32, 34, 36) comprend des capteurs de mouvement de particules.

4. Enregistreur (10) selon l'une quelconque des revendications précédentes, dans lequel le dispositif de navigation (44) comprend :
au moins un gyroscope (50, 52) ;
un accéléromètre (54) configuré pour mesurer une déflexion du logement (20) par rapport à la verticale ;
un processeur central (56) en communication de signal avec le au moins un gyroscope et le au moins un accéléromètre, le processeur central étant configuré pour déterminer un mouvement du logement autre que vertical, le processus central étant configuré pour actionner le au moins un déflecteur (62, 64) à provoquer le mouvement déterminé pour suivre le trajet déterminé.

5. Enregistreur (10) selon l'une quelconque des revendications précédentes, comprenant en outre un transducteur (22) en communication de signal avec le dispositif d'enregistrement (26), le transducteur étant configuré pour détecter des ordres (42) transmis à travers l'eau (11).

6. Enregistreur (10) selon la revendication 5, dans lequel les ordres (42) incluent une instruction à débuter l'enregistrement de signaux détectés par le au moins un capteur géophysique (30, 32, 34, 36).

7. Enregistreur (10) selon l'une quelconque des revendications précédentes, dans lequel une plaque de base (40) peut être couplée au logement (20) par un verrou libérable (38), dans lequel le logement avec la plaque de base attachée est flottable négativement, et dans lequel le logement détaché de la plaque de base est flottable positivement.

8. Enregistreur (10) selon la revendication 7, comprenant en outre un transducteur en communication de signal avec le verrou (38), le transducteur étant configuré pour détecter un ordre (42) transmis à travers l'eau (11), l'ordre étant configuré pour libérer le verrou.

9. Enregistreur (10) selon la revendication 8, dans lequel le transducteur est configuré pour émettre un signal dans l'eau (11) afin de faciliter la localisation du logement (20) lors de la flottation du logement à la surface de l'eau.

10. Enregistreur (10) selon l'une quelconque des revendications 1 à 6, dans lequel le logement (20) comprend un piston (74) disposé de façon coulissante dans celui-ci et couplé à une source régulable sélectivement (70) de gaz sous pression, la source de gaz et le piston étant configurés de sorte qu'une application de gaz sur le piston provoque son mouvement contre l'eau (11) et va augmenter un volume rempli de gaz du logement (20) de sorte que le logement devienne flottable positivement.

11. Enregistreur (10) selon la revendication 10, comprenant en outre une soupape actionnée par solénoïde (72) configurée pour libérer le gaz sous pression lors de la réception d'un signal.

12. Enregistreur (10) selon l'une quelconque des revendications précédentes, dans lequel le dispositif déclencheur de traînée (47) crée une traînée sélectionnée sur le logement (20).

13. Enregistreur (10) selon l'une quelconque des revendications précédentes, dans lequel le dispositif déclencheur de traînée (47) comprend une turbine ou hélice disposée à l'extérieur du logement (20) et le logement inclut en outre un frein (45) couplé en rotation à la turbine ou hélice, dans lequel l'actionnement du frein augmente la traînée sur le logement créée par la turbine ou l'hélice.
